Europäisches Patentamt

European Patent Office

Office européen des brevets

(19)

(11) Veröffentlichungsnummer: **0 002 490**
**B1**

(12) **EUROPÄISCHE PATENTSCHRIFT**

(45) Veröffentlichungstag der Patentschrift:
**11.03.81**

(21) Anmeldenummer: **78101573.0**

(22) Anmeldetag: **06.12.78**

�['] Int. Cl.³: **C 02 F 1/74**, A 01 C 3/02,
B 01 F 3/04, B 01 F 15/00,
H 02 P 1/32

(54) **Vorrichtung zur Belüftung von Flüssigkeiten auf Wasserbasis, insbesondere Gülle oder Kanalabwässer.**

(30) Priorität: **08.12.77 DE 2754621**

(43) Veröffentlichungstag der Anmeldung:
**27.06.79 Patentblatt 79/13**

(45) Bekanntmachung des Hinweises auf die Patenterteilung:
**11.03.81 Patentblatt 81/10**

(84) Benannte Vertragsstaaten:
**BE CH FR GB LU NL SE**

(56) Entgegenhaltungen:
**DE-A-1 932 998**
**DE-A-2 053 131**
**DE-A-2 511 717**
**DE-B-1 538 299**

(73) Patentinhaber: **Beham, Hans, Hauptstrasse 25-26,**
**D-8221 Taching am See (DE)**

(72) Erfinder: **Beham, Hans, Hauptstrasse 25-26,**
**D-8221 Taching am See (DE)**

(74) Vertreter: **Späth, Helmut, Dipl.-Phys. Dr. rer. nat.,**
**Max-Josefs-Platz 6, D-8200 Rosenheim (DE)**

## Vorrichtung zur Belüftung von Flüssigkeiten auf Wasserbasis, insbesondere Gülle oder Kanalabwässer

Die Erfindung betrifft eine Vorrichtung zur Belüftung von organische Bestandteile enthaltenden Flüssigkeiten auf Wasserbasis, insbesondere Gülle oder Kanalabwässer, mit einem über einen E-Motor angetriebenen, mit Verdrängerschaufeln oder -rippen versehenen Umwälzerrad und mit einem koaxial zu dem Umwälzerrad sowie oberhalb desselben angeordneten Luftansaugrohr, dessen oberer Einlass über den Flüssigkeitsspiegel ragt.

Bei bekannten Vorrichtungen der erwähnten Art wird das Umwälzerrad von dem E-Motor in lediglich einer Drehrichtung und mit konstanter Leistung angetrieben. Die Leistung ist hierbei meist so ausgelegt, dass sich ein verhältnismässig grosser Behälter über längere Zeit mit einem geringen Leistungsaufwand belüften lässt. Häufig ist es indessen auch erforderlich, den Inhalt des Behälters von Zeit zu Zeit teilweise abzupumpen, wobei eine möglichst homogene Mischung der Flüssigkeit sowie der darin enthaltenen organischen Bestandteile vorliegen soll. Dies wiederum setzt eine entsprechend intensive Umwälzung der Flüssigkeit kurz vor dem Abpumpen voraus, was aber von den bekannten Vorrichtungen im wesentlichen nicht geleistet wird, da diese, wie eingangs erwähnt, lediglich auf eine Belüftung der Flüssigkeit mit geringem Energieaufwand ausgelegt sind. Demnach wäre eine zusätzliche Vorrichtung erforderlich, um kurz vor einem gelegentlichen Abpumpen die Flüssigkeit intensiv mit entsprechend höherer Leistung umzuwälzen.

Wendet man eine bekannte Vorrichtung, welche mit konstanter Abgabeleistung des E-Motors arbeitet, auf einen kleineren Behälter an, so kann selbstverständlich eine dauernde intensivere Umwälzung der Flüssigkeit erreicht werden, bei welcher die enthaltenen organischen Bestandteile quasi homogen mit der Flüssigkeit gemischt sind, so dass sich diese ständig in einem zum teilweisen Abpumpen geeigneten Zustand befindet.

Andererseits wird zu einer Belüftung eine wesentliche geringere Leistung benötigt, so dass eine solche Vorrichtung ständig mit einer überhöhten Leistung betrieben werden müsste, wie sie zum reinen Belüften der Flüssigkeit nicht erforderlich ist. Es könnte nun daran gedacht werden, den E-Motor auf zwei Leistungsstufen umschaltbar zu gestalten, beispielsweise durch eine Phasenanschnittsteuerung, wie sie bei Universalmotoren bekannt ist, jedoch würde dies dazu führen, dass das Umwälzerrad nur bei einer der beiden Leistungsstufen des E-Motors mit optimalem Umwälz- bzw. Belüftungswirkungsgrad arbeitet oder in keiner der beiden Leistungsstufen, wobei im letzteren Fall das Umwälzerrad auf eine zwischen diesen beiden Leistungsstufen liegende mittlere Leistungsstufe ausgelegt sein müsste.

Aufgabe der Erfindung ist die Schaffung einer demgegenüber verbesserten Vorrichtung, welche in erster Linie eine Belüftung grosser Behälter über längere Zeiträume mit geringem Leistungsbedarf ermöglicht, unmittelbar vor einem gelegentlichen Abpumpen eines Teils der Flüssigkeit aber auch eine intensive Umwälzung bei höherem Leistungsbedarf zulässt. Daneben soll aber auch die Möglichkeit offengehalten werden, bei solchen Behältern, bei welchen vermöge entsprechender Auslegung des E-Motors eine dauernde Umwälzung erzielt wird, eine Schnellbelüftung innerhalb kurzer Zeiträume zu erzielen. Diese Aufgabenstellung wird dadurch gelöst, dass die Verdrängerschaufeln oder -rippen (13 bzw. 14 bzw. 15) in beiden Drehrichtungen unterschiedliche Strömungswiderstände aufweisen und dass die Drehrichtung des Motors (5) von intensiverer Umwälzung und Belüftung entsprechend Drehung der Verdrängerschaufeln oder -rippen mit dem höheren Strömungswiderstand bei höherer Motorleistung auf weniger intensive Umwälzung und Belüftung entsprechend Drehung der Verdrängerschaufeln oder -rippen mit dem niedrigeren Strömungswiderstand bei geringerer Motorleistung umsteuerbar ist.

Durch die Weiterbildung nach dem Patentanspruch 2 kommt der Erfindungsgedanke besonders günstig zur Geltung, weil Drehstrommotoren, die einerseits wegen ihrer Preisgünstigkeit bevorzugt für Vorrichtungen der in Rede stehenden Art eingesetzt werden können, andererseits geringere Möglichkeiten zur Steuerung der abgegebenen Leistung aufweisen, nämlich praktisch nur die Umschaltung von Dreieck- auf Sternbetrieb bzw. umgekehrt. Gerade bei Drehstrommotoren ergibt sich, wenn die vom Umwälzerrad aufgenommene Leistung nicht der Abgabenleistung des Motors entspricht, ein hoher Blindstromverlust, während andererseits bei zu hoher Auslegung der Aufnahmeleistung des Umwälzerrades gegenüber der abgegebenen Leistung des E-Motors dessen Wicklungen leicht durchbrennen können. Ausserdem lässt sich bei einer Umschaltung von Dreieck- auf Sternbetrieb ohne zusätzlichen Aufwand eine Drehrichtungsumkehr des E-Motors erzielen.

Die Weiterbildungen nach den Patentansprüchen 3 bzw. 4 bzw. 5 und gegebenenfalls 6 beinhalten günstige Ausführungsformen für die Verdrängerschaufeln oder -rippen des Umwälzerrades.

Die Erfindung ist nachstehend anhand der Zeichnung näher erläutert. Es zeigt:

Fig. 1 ein Ausführungsbeispiel einer erfindungsgemässen Vorrichtung, überwiegend in Axialschnittdarstellung, wobei indessen Einzelheiten eines zugehörigen Umwälzerrades nicht veranschaulicht sind,

Fig. 2, 3, 4 Ausführungsbeispiele für die Ausbildung eines einen Bestandteil der Vorrichtung von Fig. 1 bildenden Umwälzerrades, jeweils in perspektivischer Draufsicht von oben.

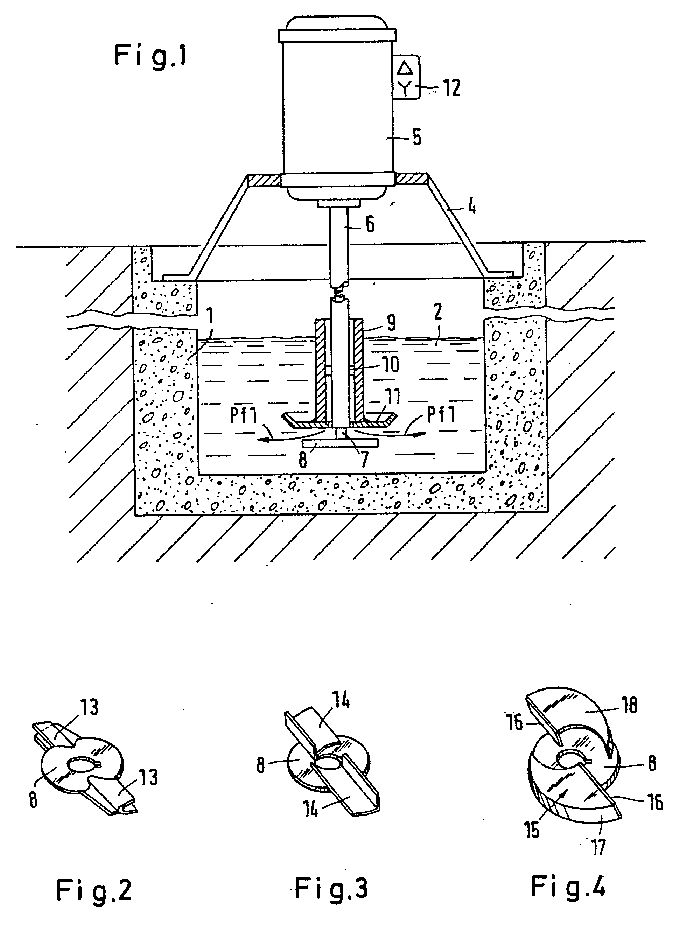

Gemäss Fig. 1 ist in einem grubenartigen Behälter 1 Gülle 2 gelagert, und über dem Behälter 1 ist mittels eines Gestells 4 ein E-Motor 5 gelagert, von dem aus eine sich in einem motorfesten Führungsrohr 6 vertikal nach unten erstreckende Motorabtriebswelle 7 geführt ist. Das untere Ende der Motorabtriebswelle 7 ist mit einem Umwälzerrad 8 versehen, das in Fig. 1 lediglich schematisch in Form einer Scheibe ohne zugeordnete Verdrängerschaufeln oder -rippen veranschaulicht ist. Das Führungsrohr 6 ist von einem Luftansaugrohr 9 konzentrisch umgeben, welches an dem Führungsrohr 6 mittels einer Spinne 10 gehalten ist. An dem unteren stirnseitigen Ende des Luftansaugrohres 9 ist eine Leitströmungsscheibe 11 befestigt, welche ein zentrales Loch entsprechend dem Innendurchmesser des Luftansaugrohres 9 aufweist.

Der E-Motor 5 ist als Drehstrommotor mit einem Stern-Dreieck-Umschalter 12 ausgebildet, wobei vermöge entsprechender Polung der Motorwicklungen in einer Drehrichtung nur Sternbetrieb, in der anderen Drehrichtung hingegen ein Stern- und Dreieckbetrieb möglich ist, wobei hier aber der Sternbetrieb nur zum Anfahren dient. Die Sternschaltstellung dient hierbei zur Belüftung der Gülle 2 nebst weniger intensiver Umwälzung derselben, während die Dreieckschaltstellung, bei welcher der E-Motor 5 eine demgegenüber höhere Leistung abgibt, zur intensiveren Umwälzung und Belüftung der Gülle 2 zum Zwecke eines kurz darauffolgenden Abpumpens vorgesehen ist. Bei einer Belüftung ergibt sich unterhalb der Leitströmscheibe 11 eine Wirbelbildung in der Flüssigkeit, wodurch von oben her Luft gemäss den gekrümmten Pfeilen Pf1 eingezogen und in die Gülle 2 eingemischt wird, so dass infolge Sauerstoffanreicherung die organischen Bestandteile der Gülle oxidiert werden können. Da bei Gülle meist auch eine gegenüber Wasser stark reduzierte Oberflächenspannung vorliegt, was zu einer entsprechenden Schaumbildung oberhalb des Flüssigkeitsspiegels führt, dient das Luftansaugrohr 9 zusätzlich noch dazu, überschüssigen Schaum zusammen mit der Luft nach unten zu fördern und wieder in die Gülle 2 einzuführen.

Gemäss Fig. 2 weist das dort veranschaulichte Umwälzerrad 8 Verdrängerschaufeln oder -rippen 13 auf, die radial verlaufend ein V- oder U-förmiges Profil aufweisen, dessen Symmetriemittelebene parallel zur Ebene des Umwälzerrades verläuft.

Bei dem Ausführungsbeispiel von Fig. 3 weisen die Verdrängerschaufeln oder -rippen 14, welche wie bei dem Ausführungsbeispiel nach Fig. 2 radial verlaufen, ein etwa L-förmiges Profil auf, dessen kürzerer Profilschenkel etwa vertikal und dessen längerer Profilschenkel spitzwinklig zur Ebene des Umwälzerrades 8 verlaufen.

Bei dem Ausführungsbeispiel von Fig. 4 sind die Verdrängerschaufeln oder -rippen 15 des Umwälzerrades 8 je aus einem radialen Streifen 16 und einem gekrümmten Umfangsstreifen 17 hergestellt, der ausgehend von dem äusseren Ende des radialen Streifens 16 zu dem Umfang des Umwälzerrades 8 hin nach innen verläuft, wobei die obere und untere Stirnfläche jeder Verdrängerschaufel oder -rippe 15 durch je eine etwa nierenförmige Stirnplatte 18 abgeschlossen sind. Bevorzugt weist der gekrümmte Umfangsstreifen 17 die Form eines Spiralabschnittes mit von aussen nach innen abnehmendem Krümmungsradius auf.

Durch die besondere Formgebung der Verdrängerschaufeln oder -rippen 13 bzw. 14 bzw. 15 wird erreicht, dass die Leistungsaufnahme des Umwälzerrades 8 stets der jeweiligen Schaltstellung (Stern erste Drehrichtung oder Dreieck zweite Drehrichtung) des E-Motors nebst der hierbei vorliegenden Abgabeleistung desselben angepasst werden kann. Der höhere Leistungsbedarf ergibt sich hierbei, wenn man die jeweilige Blickrichtung der Zeichnung zugrundelegt, für das Umwälzerrad, nach Fig. 2 und Fig. 4 bei Drehung im Gegenuhrzeigersinn, für das Umwälzerrad von Fig. 3 hingegen bei Drehung in Uhrzeigerrichtung.

## Patentansprüche

1. Vorrichtung zur Belüftung von organische Bestandteile enthaltenden Flüssigkeiten auf Wasserbasis, insbesondere Gülle oder Kanalabwässer, mit einem über einen E-Motor angetriebenen, mit Verdrängerschaufeln oder -rippen versehenen Umwälzerrad und mit einem koaxial zu dem Umwälzerrad sowie oberhalb desselben angeordneten Luftansaugrohr, dessen oberer Einlass über den Flüssigkeitsspiegel ragt, dadurch gekennzeichnet, dass die Verdrängerschaufeln oder -rippen (13 bzw. 14 bzw. 15) in beiden Drehrichtungen unterschiedliche Strömungswiderstände aufweisen und dass die Drehrichtung des Motors (5) von intensiverer Umwälzung und Belüftung entsprechend Drehung der Verdrängerschaufeln oder -rippen mit dem höheren Strömungswiderstand bei höherer Motorleistung auf weniger intensive Umwälzung und Belüftung entsprechend Drehung der Verdrängerschaufeln oder -rippen mit dem niedrigeren Strömungswiderstand bei geringerer Motorleistung umsteuerbar ist.

2. Vorrichtung nach Anspruch 1, dadurch gekennzeichnet, dass der E-Motor (5) als Drehstrommotor ausgebildet und mit einem Stern-Dreieck-Umschalter (12) versehen ist, der gleichzeitig als Drehrichtungsumschalter ausgebildet ist.

3. Vorrichtung nach Anspruch 1 oder 2, dadurch gekennzeichnet, dass die Verdrängerschaufeln oder -rippen (13) radial verlaufen und ein V- oder U-förmiges Profil aufweisen, dessen Symmetriemittelebene in der Ebene des Umwälzerrades (8) oder parallel hierzu verläuft.

4. Vorrichtung nach Anspruch 1 oder 2, dadurch gekennzeichnet, dass die Verdrängerschaufeln oder -rippen (14) radial verlaufen und ein etwa L-förmiges Profil aufweisen, dessen kürzerer Profilschenkel etwa vertikal und dessen längerer Profilschenkel spitzwinklig zur Ebene des Umwälzerrades (8) verlaufen.

5. Vorrichtung nach Anspruch 1 oder 2, dadurch gekennzeichnet, dass die Verdrängerschaufeln oder -rippen (15) des Umwälzerrades (8) je aus einem radialen Streifen (16) und einem gekrümmten Umfangsstreifen (17) bestehen, der ausgehend von dem äusseren Ende des radialen Streifens zu dem Umfang des Umwälzerrades nach innen verläuft, und dass die obere und untere Stirnfläche jeder Verdrängerschaufel oder -rippe durch je eine etwa nierenförmige Stirnplatte (18) abgeschlossen sind.

6. Vorrichtung nach Anspruch 5, dadurch gekennzeichnet, dass der gekrümmte Umfangsstreifen (17) die Form eines Spiralabschnittes mit von aussen nach innen abnehmendem Krümmungsradius aufweist.

## Claims

1. Device for aerating liquids on water-basis containing organic components, especially dungwater or canalisation waste water, said device having a circulating wheel being driven through an electric motor and being provided with displacement shells or ribs and having further an air suction tube being disposed coaxially to said circulating wheel and above the latter, the upper inlet of which suction tube extends over the liquid level, characterized in that the displacement shells or ribs (13 or 14 or 15 respective) have different flowing resistances in both rotational directions and that the rotational direction of the motor (5) is to be changed from a more intensive circulation and aeration corresponding to a rotation of the displacement shells or ribs with the larger flowing resistance in connection with larger motor power to a less intensive circulation and aeration corresponding to a rotation of the displacement shells or ribs with the smaller flowing resistance in connection with smaller motor power.

2. Device as per claim 1, characterized in that the electric motor (5) is formed as rotational-current motor and is provided with a star/triangle-switch (12), which additionally is formed as rotational direction changing switch.

3. Device as per claim 1 or 2, characterized in that the displacement shells or ribs (13) extend radially and have a V- or U-shaped profile, the symmetry-middle-plane of which extends in the plane of the circulating wheel (8) or in parallel direction thereto.

4. Device as per claim 1 or 2, characterized in that the displacement shells or ribs (14) extend radially and have an about L-shaped profile, the shorter profile-leg of which extends about vertically and the longer profile leg extends in an acute angle to the plane of the circulating wheel (8).

5. Device as per claim 1 or 2, characterized in that the displacement shells or ribs (15) of the circulating wheel (8) consist each of a radial strip (16) and a curved periphery strip (17), which starting from the outer end of the radial strip extends to the periphery of the circulating wheel towards the interior, and that the upper and lower front face of each displacement shell or rib are closed by each an about kidney-like face-plate (18).

6. Device as per claim 5, characterized in that the curved periphery strip (17) has the form of a spiral portion with a curving radius being reduced from the outer to the inner ranges.

## Revendications

1. Dispositif pour l'aération de liquides à base d'eau contenant des composants organiques et plus particulièrement de purin ou d'eaux d'égout, comportant une roue de recyclage entraînée par un moteur électrique et munie de palettes ou ailettes de déplacement, et un tube d'aspiration disposé au-dessus de la roue de recyclage et coaxialement à celle-ci et dont l'admission supérieure émerge de la surface du liquide, caractérisé en ce que les palettes ou ailettes de déplacement (13, 14 et 15 respectivement) présentent, dans les deux sens de rotation, des différences dans leur résistance à l'écoulement et que le sens de rotation du moteur (5) est réversible pour permettre de passer du régime de recyclage et d'aération plus intensif correspondant à la rotation des palettes ou ailettes à résistance à l'écoulement plus élevée et à puissance de moteur plus élevée, au régime de recyclage et d'aération moins intensif correspondant à la rotation des palettes ou ailettes à résistance à l'écoulement moins élevée et à puissance de moteur réduite.

2. Dispositif selon la revendication 1, caractérisé en ce que le moteur électrique (5) est du type moteur à courant triphasé et équipé avec un commutateur étoile-triangle (12) faisant en même temps fonction d'inverseur de sens de rotation.

3. Dispositif selon les revendications 1 ou 2, caractérisé en ce que les palettes ou ailettes de déplacement (13) sont disposées radialement et ont un profil en V ou en U, dont le plan symétrique médian est situé dans le plan de la roue de recyclage (8) ou parallèlement à celui-ci.

4. Dispositif selon les revendications 1 ou 2, caractérisé en ce que les palettes ou ailettes de déplacement (14) sont disposées radialement et ont un profil sensiblement en L, dont l'aile courte s'étend sensiblement verticalement et dont l'aile longue fait un angle aigu avec le plan de la roue de recyclage (8).

5. Dispositif selon les revendications 1 ou 2, caractérisé en ce que les palettes ou ailettes de déplacement (15) de la roue de recyclage (8) consistent chacune en une bande radiale (16) et une bande périphérique courbe (17), qui part de l'extrémité extérieure de la bande radiale vers l'intérieur en direction de la périphérie de la roue de recyclage, et que les faces terminales supérieure et inférieure de chaque palette ou ailette sont obturées par une plaque (18) ayant sensiblement la forme d'un rein.

6. Dispositif selon la revendication 5, caractérisé en ce que la bande périphérique courbe (17) a la forme d'un tronçon de spirale dont le rayon de courbure va diminuant de l'extérieur vers l'intérieur.

Fig.1

Fig.2

Fig.3

Fig.4